# EUROPEAN PATENT APPLICATION

(11) **EP 4 213 420 A1**
(43) Date of publication of application: **19.07.2023**
(21) Application number: 20954616.7
(22) Date of filing: 25.09.2020
(51) Int. Cl.: H04L 1/00, H04L 1/16, H04L 1/06

(54) **COMMUNICATION METHOD AND APPARATUS**

(71) Applicant: Huawei Technologies Co., Ltd., Shenzhen, Guangdong 518129 (CN)
(72) Inventor: LI, Xinxian, Shenzhen, Guangdong 518129 (CN); PENG, Jinlin, Shenzhen, Guangdong 518129 (CN); FAN, Li, Shenzhen, Guangdong 518129 (CN); GAO, Yu, Shenzhen, Guangdong 518129 (CN); ZHONG, Zhimeng, Shenzhen, Guangdong 518129 (CN)
(74) Representative: Huawei European IPR
(86) International application number: PCT/CN2020/117894
(87) International publication number: WO 2022/061764

(57) **Abstract**

This application relates to the field of communication technologies, and discloses a communication method and apparatus. The method includes: A terminal device works on a plurality of downlink carriers, and the plurality of downlink carriers include a first downlink carrier and a second downlink carrier. The terminal device obtains first channel information, where the first channel information includes second channel information, and the first downlink carrier and the second downlink carrier share the second channel information; and sends the first channel information to an access network device. In this manner, the first downlink carrier and the second downlink carrier support sharing of a part or all of channel information. In this way, the terminal device may not need to separately measure channel information of the first downlink carrier and the second downlink carrier. This helps lower a processing burden of channel information measurement. In addition, the terminal device may not need to separately feed back the channel information of the first downlink carrier and the second downlink carrier, so that channel information feedback overheads are reduced.

## Description

### TECHNICAL FIELD

This application relates to the field of wireless communication technologies, and in particular, to a communication method and apparatus.

### BACKGROUND

In a wireless communication system, as a quantity of intelligent terminal users continuously increases, a user service volume and a data throughput also continuously increase. Further, a higher requirement is imposed on a communication bandwidth and a communication rate. Therefore, a carrier aggregation (carrier aggregation, CA) technology is introduced to support a solution of a larger transmission bandwidth.

In a carrier aggregation scenario, a terminal device may work on a plurality of downlink carriers. For each of the plurality of downlink carriers, the terminal device may measure channel information of the downlink carrier, and send the channel information obtained through measurement to an access network device.

### SUMMARY

This application provides a communication method and apparatus. Different carriers share a part or all of channel information, to help lower a processing burden of channel information measurement and reduce channel information feedback overheads.

According to a first aspect, an embodiment of this application provides a communication method. The method may be applied to a terminal device or a chip in the terminal device. An example in which the method is applied to the terminal device is used. The terminal device may work on a plurality of downlink carriers, and the plurality of downlink carriers include a first downlink carrier and a second downlink carrier. In the method, the terminal device obtains first channel information, where the first channel information includes second channel information, and the first downlink carrier and the second downlink carrier share the second channel information; and sends the first channel information to an access network device.

In this manner, the first downlink carrier and the second downlink carrier support sharing of a part or all of channel information. In this way, the terminal device may not need to separately measure channel information of the first downlink carrier and the second downlink carrier. This helps lower a processing burden of channel information measurement. In addition, the terminal device may not need to separately feed back the channel information of the first downlink carrier and the second downlink carrier, so that channel information feedback overheads are reduced.

In a possible design, the first channel information further includes third channel information and fourth channel information; and obtaining the first channel information includes: performing measurement based on a reference signal of the first downlink carrier, to obtain the second channel information and the third channel information; and performing measurement based on a reference signal of the second downlink carrier, to obtain the fourth channel information.

In this manner, the terminal device may perform measurement based on the reference signal of the first downlink carrier, to obtain the second channel information shared by the first downlink carrier and the second downlink carrier. Compared with a manner in which the terminal device separately measures all channel information on each downlink carrier, this manner can effectively lower the processing burden of channel information measurement performed by the terminal device.

In a possible design, the first channel information further includes third channel information and fourth channel information; and obtaining the first channel information includes: performing joint measurement based on a reference signal of the first downlink carrier and a reference signal of the second downlink carrier, to obtain the second channel information; performing measurement based on the reference signal of the first downlink carrier, to obtain the third channel information; and performing measurement based on the reference signal of the second downlink carrier, to obtain the fourth channel information.

In this manner, the terminal device may perform joint measurement based on the reference signal of the first downlink carrier and the reference signal of the second downlink carrier, to obtain the second channel information shared by the first downlink carrier and the second downlink carrier. Compared with a manner in which the terminal device separately measures all channel information on each downlink carrier, this manner can effectively lower the processing burden of channel information measurement performed by the terminal device. In addition, through joint measurement, channel information having higher precision can be obtained based on a reference signal having a larger bandwidth.

In a possible design, sending the first channel information to the access network device includes: sending the second channel information and the third channel information of the first downlink carrier to the access network device, and sending the fourth channel information of the second downlink carrier to the access network device.

In this manner, the terminal device may feed back a part of channel information for the second downlink carrier. Therefore, the channel information feedback overheads can be effectively reduced.

In a possible design, the method further includes: determining that the first downlink carrier and the second downlink carrier support sharing of a part or all of channel information.

In a possible design, the determining that the first downlink carrier and the second downlink carrier support sharing of a part or all of channel information includes: determining, when the first downlink carrier and the second downlink carrier are in a same frequency band combination, that the first downlink carrier and the second downlink carrier support sharing of the part or all of the channel information; or determining, when a difference between a center frequency of the first downlink carrier and a center frequency of the second downlink carrier is less than a first threshold, that the first downlink carrier and the second downlink carrier support sharing of a part or all of channel information.

In a possible design, the determining that the first downlink carrier and the second downlink carrier support sharing of a part or all of channel information includes: receiving first indication information from the access network device, where the first indication information indicates that the first downlink carrier and the second downlink carrier support sharing of the part or all of the channel information.

In this manner, the access network device indicates to the terminal device that the first downlink carrier and the second downlink carrier support sharing of the part or all of the channel information, so that adjustment and control flexibility of the access network device can be improved.

In a possible design, the determining that the first downlink carrier and the second downlink carrier support sharing of a part or all of channel information includes: receiving configuration information from the access network device, where the configuration information is for configuring that there is an association relationship between the reference signal of the first downlink carrier and the reference signal of the second downlink carrier; and determining, based on the configuration information, that the first downlink carrier and the second downlink carrier support sharing of the part or all of the channel information.

According to a second aspect, an embodiment of this application provides a communication method. The method may be applied to an access network device or a chip in the access network device. That the method is applied to the access network device is used as an example. In the method, the access network device obtains first channel information, where the first channel information includes second channel information, and a first downlink carrier and a second downlink carrier share the second channel information; and sends downlink information to a terminal device on the first downlink carrier and/or the second downlink carrier.

In a possible design, the first channel information further includes third channel information and fourth channel information; and obtaining the first channel information includes: receiving the second channel information and the third channel information of the first downlink carrier from the terminal device, and receiving the fourth channel information of the second downlink carrier from the terminal device.

In a possible design, the first channel information further includes third channel information and fourth channel information; and obtaining the first channel information includes: performing joint measurement based on a reference signal of an uplink carrier corresponding to the first downlink carrier and a reference signal of an uplink carrier corresponding to the second downlink carrier, to obtain the second channel information; or performing measurement based on a reference signal of an uplink carrier corresponding to the first downlink carrier, to obtain the second channel information; and receiving the third channel information of the first downlink carrier from the terminal device, and receiving the fourth channel information of the second downlink carrier from the terminal device.

In a possible design, the method further includes: sending first indication information to the terminal device, where the first indication information indicates that the first downlink carrier and the second downlink carrier support sharing of a part or all of channel information.

In a possible design, the method further includes: sending configuration information to the terminal device, where the configuration information is for configuring that there is an association relationship between a reference signal of the first downlink carrier and a reference signal of the second downlink carrier.

It should be noted that the method described in the second aspect corresponds to the method described in the first aspect. For beneficial effects of related technical features in the method described in the second aspect, refer to the descriptions in the first aspect. Details are not described again.

According to a third aspect, an embodiment of this application provides a communication apparatus. The communication apparatus may be a terminal device or a chip disposed in the terminal device. The communication apparatus has a function for implementing the first aspect. For example, the communication apparatus includes a corresponding module, unit, or means (means) for performing the steps in the first aspect. The function, unit, or means may be implemented by using software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive configuration information from the terminal device. The processing unit may be configured to perform some internal operations of the communication apparatus. Functions performed by the processing unit and the communication unit may correspond to the operations in the first aspect.

In a possible design, the communication apparatus includes a processor, and may further include a transceiver. The transceiver is configured to receive and send a signal, and the processor executes program instructions to complete the method according to any one of the possible designs or implementations of the first aspect. The communication apparatus may further include one or more memories. The memory is configured to be coupled to the processor, and the memory may store a necessary computer program or instructions for implementing the function in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor, and the processor may be configured to be coupled to a memory. The memory may store a necessary computer program or instructions for implementing the function in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor and an interface circuit. The processor is configured to communicate with another apparatus through the interface circuit, and perform the method according to any one of the possible designs or implementations of the first aspect.

According to a fourth aspect, an embodiment of this application provides a communication apparatus. The communication apparatus may be an access network device or a chip disposed in the access network device. The communication apparatus has a function for implementing the second aspect. For example, the communication apparatus includes a corresponding module, unit, or means for performing the operations in the second aspect. The module, unit, or means may be implemented by using software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive configuration information from a terminal device. The processing unit may be configured to perform some internal operations of the communication apparatus. Functions performed by the processing unit and the communication unit may correspond to the operations in the second aspect.

In a possible design, the communication apparatus includes a processor, and the processor may be configured to be coupled to a memory. The memory may store a necessary computer program or instructions for implementing the function in the second aspect. The processor may execute the computer program or the instructions stored in the memory. When the computer program or the instructions are executed, the communication apparatus is enabled to implement the method according to any one of the possible designs or implementations of the second aspect.

In a possible design, the communication apparatus includes a processor, and the processor may be configured to be coupled to a memory. The memory may store a necessary computer program or instructions for implementing the function in the second aspect. The processor may execute the computer program or the instructions stored in the memory. When the computer program or the instructions are executed, the communication apparatus is enabled to implement the method according to any one of the possible designs or implementations of the second aspect.

In a possible design, the communication apparatus includes a processor and an interface circuit. The processor is configured to communicate with another apparatus through the interface circuit, and perform the method according to any one of the possible designs or implementations of the second aspect.

It may be understood that, in the third aspect or the fourth aspect, the processor may be implemented by using hardware, or may be implemented by using software. When the processor is implemented by using the hardware, the processor may be a logic circuit, an integrated circuit, or the like; or when the processor is implemented by using the software, the processor may be a general-purpose processor, and is implemented by reading software code stored in the memory. In addition, there may be one or more processors and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fifth aspect, an embodiment of this application provides a communication system. The communication system includes the communication apparatus in the third aspect and the communication apparatus in the fourth aspect.

According to a sixth aspect, this application provides a computer-readable storage medium. The computer storage medium stores computer-readable instructions. When a computer reads and executes the computer-readable instructions, the computer is enabled to perform the method according to any one of the possible designs of the first aspect or the second aspect.

According to a seventh aspect, this application provides a computer program product. When a computer reads and executes the computer program product, the computer is enabled to perform the method according to any one of the possible designs of the first aspect or the second aspect.

According to an eighth aspect, this application provides a chip. The chip includes a processor. The processor is coupled to a memory, and is configured to read and execute a software program stored in the memory, to implement the method according to any one of the possible designs of the first aspect or the second aspect.

These aspects or other aspects of this application are more readily apparent from descriptions of the following embodiments.

### BRIEF DESCRIPTION OF DRAWINGS

FIG. 1 is a schematic diagram of a network architecture to which an embodiment of this application is applicable;
FIG. 2 is a schematic diagram of another network architecture to which an embodiment of this application is applicable;
FIG. 3 is a schematic diagram of another network architecture to which an embodiment of this application is applicable;
FIG. 4 is a schematic flowchart corresponding to a communication method according to Embodiment 1 of this application;
FIG. 5 is a schematic flowchart corresponding to a communication method according to Embodiment 2 of this application;
FIG. 6 is a possible example block diagram of an apparatus according to an embodiment of this application;
FIG. 7 is a schematic diagram of a structure of a terminal device according to an embodiment of this application; and
FIG. 8 is a schematic diagram of a structure of an access network device according to an embodiment of this application.

### DESCRIPTION OF EMBODIMENTS

The following clearly describes the technical solutions in embodiments of this application with reference to the accompanying drawings in embodiments of the present invention.

First, some terms in embodiments of this application are explained and described, to facilitate understanding of a person skilled in the art.
(1) Terminal device: The terminal device may be a wireless terminal device that can receive scheduling and indication information from an access network device. The wireless terminal device may be a device that provides a user with voice and/or data connectivity, a handheld device with a wireless connection function, or another processing device connected to a wireless modem. The terminal device may communicate with one or more core networks or the Internet through a radio access network (radio access network, RAN). The terminal device may be a mobile terminal device, for example, a mobile phone (or referred to as a "cellular" phone or a mobile phone (mobile phone)), a computer, or a data card. For example, the terminal device may be a portable, pocket-sized, handheld, computer built-in, or in-vehicle mobile apparatus that exchanges voice and/or data with the radio access network. For example, the terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal device), an access terminal device (access terminal device), a user terminal device (user terminal device), a user agent (user agent), a subscriber station (subscriber station, SS), a customer premises equipment (customer premises equipment, CPE), a terminal (terminal), user equipment (user equipment, UE), a mobile terminal (mobile terminal, MT), or the like. The terminal device may alternatively be a wearable device, a terminal device in a next-generation communication system such as a 5G communication system, a terminal device in a future evolved public land mobile network (public land mobile network, PLMN), or the like.
(2) Access network device: The access network device may be a device in a wireless network. For example, the access network device may be a radio access network (radio access network, RAN) node (or device), or may be referred to as a base station, through which the terminal device accesses the wireless network. Currently, some examples of the RAN device are: a next generation NodeB (next generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), abase band unit (base band unit, BBU), a wireless fidelity (wireless fidelity, Wi-Fi) access point (access point, AP), and the like. In addition, in a network structure, the access network device may include a central unit (central unit, CU) node, a distributed unit (distributed unit, DU) node, or a RAN device including a CU node and a DU node. In addition, in another possible case, the access network device may be another apparatus that provides a wireless communication function for the terminal device. A specific technology and a specific device form for the access network device are not limited in embodiments of this application. For ease of description, in embodiments of this application, an apparatus that provides a wireless communication function for the terminal device is referred to as an access network device.
(3) The terms "system" and "network" may be used interchangeably in embodiments of this application. "At least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, "at least one of A, B, and C" includes A, B, C, AB, AC, BC, or ABC. In addition, unless otherwise specified, ordinal numbers such as "first" and "second" mentioned in embodiments of this application are for distinguishing between a plurality of objects, but are not for limiting a sequence, a time sequence, priorities, or importance of the plurality of objects.

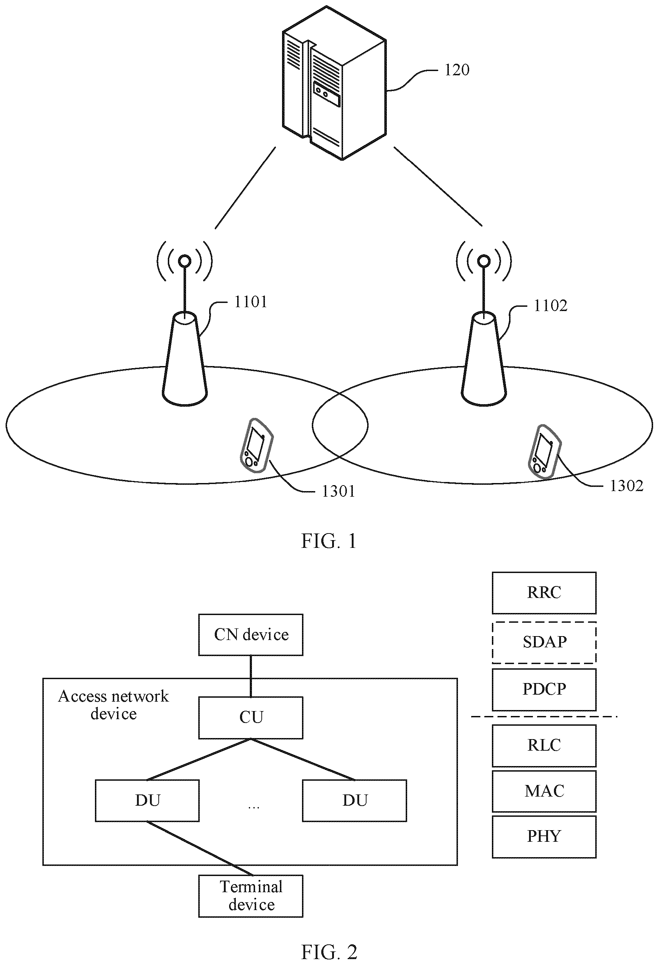

FIG. 1 is a schematic diagram of a network architecture to which an embodiment of this application is applicable. As shown in FIG. 1, a terminal device may access a wireless network, to access a service of an external network (for example, the Internet) through the wireless network, or communicate with another device through the wireless network, for example, may communicate with another terminal device. The wireless network includes a RAN and a core network (core network, CN). The RAN is configured to enable the terminal device (for example, a terminal device 1301 or a terminal device 1302) to access the wireless network, and the CN is configured to manage the terminal device and provide a gateway for communicating with the external network.

The RAN may include one or more access network devices, for example, an access network device 1101 and an access network device 1102.

The CN may include one or more CN devices, for example, a CN device 120. When the network architecture shown in FIG. 1 is applicable to a 5G communication system, the CN device 120 may include an AMF entity, an SMF entity, a UPF entity, and the like.

It should be understood that quantities of devices in a communication system shown in FIG. 1 are merely used as an example. This embodiment of this application is not limited thereto. During actual application, the communication system may further include more terminal devices and more access network devices, and may further include another device.

FIG. 2 is a schematic diagram of another network architecture to which an embodiment of this application is applicable. As shown in FIG. 2, the network architecture includes a CN device, an access network device, and a terminal device. The access network device includes a baseband apparatus and a radio frequency apparatus. The baseband apparatus may be implemented through one node, or may be implemented through a plurality of nodes. The radio frequency apparatus may be independently implemented remotely from the baseband apparatus, or may be integrated into the baseband apparatus, or some functions are independently integrated and some functions are integrated into the baseband apparatus. For example, in an LTE communication system, the access network device includes the baseband apparatus and the radio frequency apparatus. The radio frequency apparatus may be remotely disposed relative to the baseband apparatus. For example, a remote radio unit (remote radio unit, RRU) is a remote radio unit disposed relative to a BBU.

Communication between the access network device and the terminal device complies with a specific protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

The access network device may implement functions of the protocol layers such as the RRC layer, the PDCP layer, the RLC layer, and the MAC layer through one node or a plurality of nodes. For example, in an evolved structure, the access network device may include a CU and a DU, and a plurality of DUs may be controlled by one CU in a centralized manner. As shown in FIG. 2, a CU and DUs may be divided based on a protocol layer of a wireless network. For example, functions of the PDCP layer and layers above the PDCP layer are set in the CU, and functions of protocol layers, for example, the RLC layer and the MAC layer, below the PDCP layer are set in the DUs.

Division based on the protocol layer is merely an example, and division may alternatively be performed based on another protocol layer such as the RLC layer. Functions of the RLC layer and protocol layers above the RLC layer are set in the CU, and functions of protocol layers below the RLC layer is set in the DUs. Alternatively, division is performed at a protocol layer. For example, some functions of the RLC layer and functions of protocol layers above the RLC layer are set in the CU, and a remaining function of the RLC layer and functions of protocol layers below the RLC layer are set in the DUs. In addition, division may alternatively be performed in another manner. For example, division is performed based on a delay. A function whose processing time needs to meet a delay requirement is set in the DUs, and a function whose processing time does not need to meet the delay requirement is set in the CU.

In addition, the radio frequency apparatus may be not placed in the DU but is integrated independently, or may be integrated into the DU, or a part is placed remotely from the DU and a remaining part is integrated into the DU. This is not limited herein.

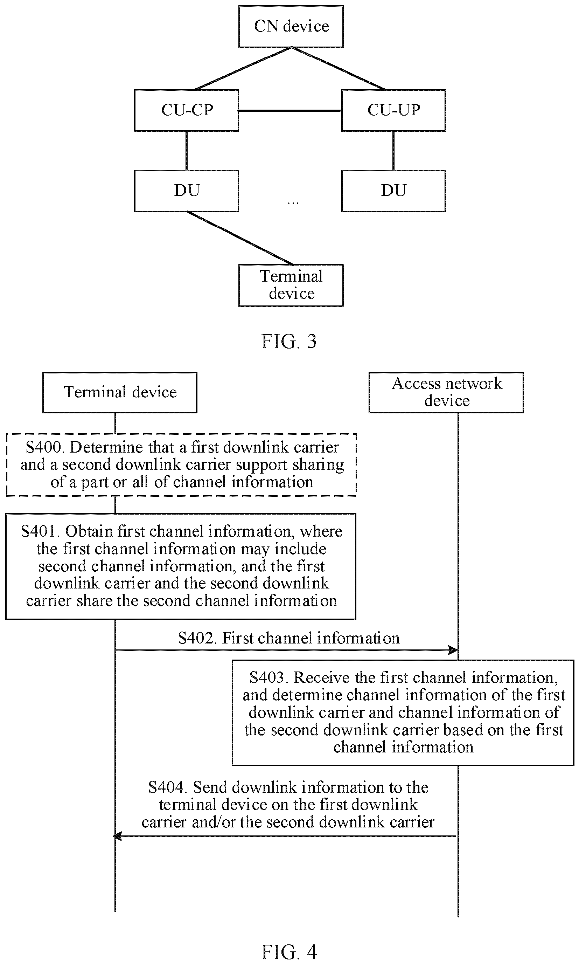

FIG. 3 is a schematic diagram of another network architecture to which an embodiment of this application is applicable. In comparison with the network architecture shown in FIG. 2, a control plane (CP) and a user plane (UP) of a CU may alternatively be separated into different entities for implementation in FIG. 3, and the different entities are a control plane (control panel, CP) CU entity (namely, a CU-CP entity) and a user plane (user panel, UP) CU entity (namely, a CU-UP entity).

In the foregoing network architecture, signaling generated by the CU may be sent to a terminal device by using DUs, or signaling generated by a terminal device may be sent to the CU by using DUs. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling of an RRC layer or a PDCP layer is finally processed as signaling of a PHY layer and sent to the terminal device, or signaling of an RRC layer or a PDCP layer is converted from received signaling of a PHY layer. In this architecture, it may also be considered that the signaling of the RRC layer or the PDCP layer is sent by the DU, or sent by the DU and a radio frequency apparatus.

The network architecture shown in FIG. 1, FIG. 2, or FIG. 3 is applicable to communication systems of various radio access technologies (radio access technologies, RATs). For example, the communication system may be a 4G (or referred to as long term evolution (long term evolution, LTE)) communication system, may be a 5G (or referred to as new radio (new radio, NR)) communication system, or may be a transition system between the LTE communication system and the 5G communication system. The transition system may also be referred to as a 4.5G communication system. Certainly, the communication system may alternatively be a future communication system. The network architectures and the service scenarios described in embodiments of this application are intended to describe the technical solutions in embodiments of this application more clearly, and do not constitute a limitation on the technical solutions provided in embodiments of this application. A person of ordinary skill in the art may learn that, with evolution of the communication network architecture and emergence of new service scenarios, the technical solutions provided in embodiments of this application are also applicable to similar technical problems.

An apparatus in the following embodiments of this application may be located in the terminal device or the access network device based on a function implemented by the apparatus. When the foregoing CU-DU structure is used, the access network device may be a CU, a DU, or a device including the CU and the DU.

The following first explains and describes related technical features in embodiments of this application. It should be noted that these explanations are intended to make embodiments of this application easier to understand, but should not be considered as a limitation on the protection scope claimed in this application.

### 1. Carrier aggregation

Carrier aggregation is a solution that aggregates two or more component carriers (component carriers, CCs) together to support a larger transmission bandwidth. To efficiently use fragmented spectrums, carrier aggregation supports aggregation of different component carriers, for example, aggregation of adjacent or non-adjacent component carriers in a same frequency band or aggregation of component carriers in different frequency bands. In the carrier aggregation solution, concepts of a primary cell and a secondary cell exist.

The primary cell may be a cell in which a terminal device performs initial connection establishment, the primary cell may be a cell in which a terminal device performs radio resource control (radio resource control, RRC) connection reestablishment, the primary cell may be a primary cell specified in a handover (handover) process, or the like. The primary cell is mainly for RRC communication with the terminal device. A component carrier corresponding to the primary cell is referred to as a primary component carrier (primary component carrier, PCC). A downlink carrier of the primary component carrier is referred to as a downlink primary component carrier (downlink PCC, DL PCC), and an uplink carrier of the primary component carrier is referred to as an uplink primary component carrier (uplink PCC, UL PCC).

The secondary cell is mainly for providing an additional radio resource. For example, there is no RRC communication between the secondary cell and the terminal device. The secondary cell may be added during RRC reconfiguration. A component carrier corresponding to the secondary cell is referred to as a secondary component carrier (secondary component carrier, SCC) (which may be referred to as a secondary carrier for short). A downlink carrier of the secondary component carrier is referred to as a downlink secondary component carrier (downlink SCC, DL SCC), and an uplink carrier of the secondary component carrier is referred to as an uplink secondary component carrier (uplink SCC, UL SCC).

### 2. Reference signal

The reference signal (reference signal, RS) may also be referred to as a pilot (pilot), a reference sequence, or the like. In embodiments of this application, the reference signal may be a reference signal for channel measurement. For example, the reference signal may be a channel state information reference signal (channel state information reference signal, CSI-RS), a sounding reference signal (sounding reference signal, SRS), a demodulation reference signal (demodulation reference signal, DMRS), or a synchronous signal/physical broadcast channel block (synchronous signal/physical broadcast channel block, SS/PBCH block, which may also be referred to as SSB for short).

### 3. Channel information

In a possible implementation, an access network device may send a reference signal to a terminal device on a downlink carrier. Then, the terminal device may perform measurement based on the received reference signal, to obtain a channel matrix; and feed back channel information for describing the channel matrix to the access network device. Accordingly, after receiving the channel information, the access network device may obtain the channel matrix based on the channel information, and then process a to-be-sent signal on the downlink carrier by using a matched precoding matrix, so that a precoded to-be-sent signal is adapted to a channel. In this way, complexity of eliminating inter-channel impact by the terminal device is lowered. Therefore, precoding processing is performed on the to-be-sent signal, so that received signal quality (for example, a signal to interference plus noise ratio (signal to interference plus noise ratio, SINR)) is improved.

The channel matrix is an intermediate item that is for constructing a precoding matrix and that is proposed based on continuity in frequency domain. The channel matrix may meet: *H* = *SCF^{H}. H* represents a channel matrix; *S* represents a matrix constructed by using one or more (for example, K) angle vectors, for example, *S*= [*a* (*θ*₁) *a* (*θ*₂)... *a* (*θ_{K}*)]; *F* represents a matrix constructed by using one or more (for example, L) delay vectors, for example, *F*= [*b*(*τ*₁) *b*(*τ*₂) ···*b*(*τ*_{L}) ]; and *C* represents a coefficient matrix constructed by using a weighting coefficient corresponding to each of the K angle vectors and each of the L delay vectors.

For example, an angle vector may be understood as a precoding vector for performing beamforming on a to-be-sent signal. A transmitted signal may have specific spatial directivity through beamforming. Therefore, a process of precoding the to-be-sent signal based on the angle vector may also be considered as a space domain (or referred to as spatial domain for short) precoding process. A delay vector may be understood as a vector that indicates a change rule of a channel in frequency domain. Precoding the to-be-sent signal based on the delay vector may essentially mean performing phase rotation on each frequency domain unit in frequency domain based on an element in the delay vector, to pre-compensate, by using a precoding technology, a frequency selective characteristic caused by a multipath delay. Therefore, a process of precoding the to-be-sent signal based on the delay vector may be considered as a frequency domain precoding process.

In embodiments of this application, channel information of the downlink carrier may include angle channel information (for example, *S*), delay channel information (for example, *F*), and angle-delay weighting coefficient information (for example, *C*).

Based on the foregoing related technical features, in a carrier aggregation scenario, a terminal device may work on a plurality of downlink carriers, for example, a downlink carrier 1 and a downlink carrier 2. In this case, the terminal device may perform measurement based on a reference signal of the downlink carrier 1 to obtain channel information (for example, *S*1, *F*1, and *C*1) of the downlink carrier 1, and send the channel information of the downlink carrier 1 to an access network device; and perform measurement based on a reference signal of the downlink carrier 2 to obtain channel information (for example, *S*2, *F*2*,* and *C*2) of the downlink carrier 2, and send the channel information of the downlink carrier 2 to the access network device. In this manner, the terminal device separately measures channel information on each downlink carrier. This results in a heavy processing burden of the terminal device. In addition, the terminal device separately feeds back the channel information of the downlink carrier to the access network device. This results in high channel information feedback overheads.

Based on this, embodiments of this application provide a communication method. Different carriers share a part or all of channel information, to help lower the processing burden of channel information measurement and reduce the channel information feedback overheads.

For example, that different carriers share a part or all of channel information may mean that different downlink carriers share the part or all of the channel information. That different downlink carriers share the part or all of the channel information may mean that two downlink carriers share the part or all of the channel information, or may mean that at least two downlink carriers share the part or all of the channel information. In embodiments of this application, an example in which the two downlink carriers share the part or all of the channel information is used for description.

That the two downlink carriers share the part of the channel information may mean that the two downlink carriers share angle channel information, delay channel information, and angle-delay weighting coefficient information. That the two downlink carriers share the part of the channel information may mean that the two downlink carriers share a part of the angle channel information, the delay channel information, and the angle-delay weighting coefficient information. For example, the two downlink carriers may share the angle channel information, but do not share the delay channel information and the angle-delay weighting coefficient information. For another example, the two downlink carriers may share the angle channel information and the delay channel information, but do not share the angle-delay weighting coefficient information. For another example, the angle channel information may include two or more subparts (for example, three subparts: *S*1,*S*2, and *S*3). In this case, the two downlink carriers may share *S*₁ in the angle channel information, but do not share *S*2 and *S*3 in the angle channel information, the delay channel information, and the angle-delay weighting coefficient information. For another example, the delay channel information may include two or more subparts (for example, three subparts: *F*1*, F*2*,* and *F*3). In this case, the two downlink carriers may share *S*₁ in the angle channel information and *F*₁ in the delay channel information, but do not share *S*2 and *S*3 in the angle channel information, *F*2 and *F*3 in the delay channel information, and the angle-delay weighting coefficient information.

It should be noted that, that different downlink carriers share the part or all of the channel information may alternatively be understood as that the different downlink carriers may perform multi-band coordination. That is, association between reference signals on the different downlink carriers is enabled based on some channel similarity between the different downlink carriers.

The following describes in detail the communication method provided in embodiments of this application with reference to Embodiment 1 and Embodiment 2.

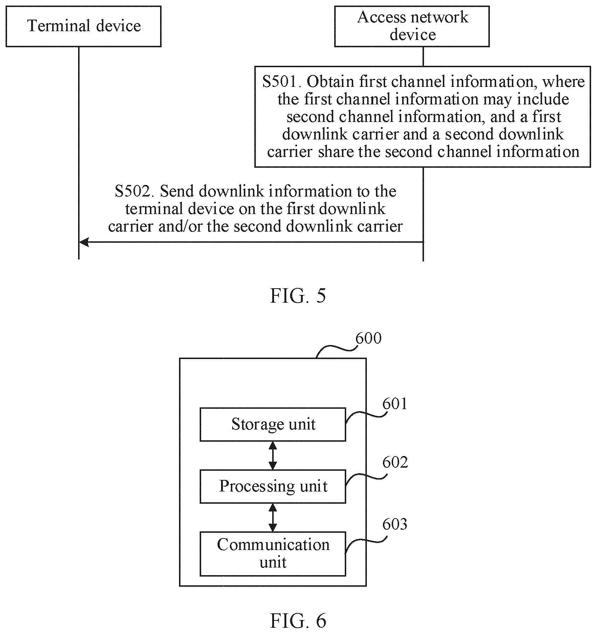

In the following description process, that the method is applied to the system architecture shown in FIG. 1 is used as an example. In addition, the method may be performed by two communication apparatuses. The two communication apparatuses are, for example, a first communication apparatus and a second communication apparatus. The first communication apparatus may be an access network device or a communication apparatus that can support the access network device in implementing a function needed in the method. Certainly, the first communication apparatus may alternatively be another communication apparatus, for example, a chip or a chip system. The second communication apparatus may be a terminal device or a communication apparatus that can support the terminal device in implementing a function needed in the method. Certainly, the second communication apparatus may alternatively be another communication apparatus, for example, a chip or a chip system. For ease of description, the following uses an example in which the method is performed by the access network device and the terminal device, to be specific, an example in which the first communication apparatus is the access network device and the second communication apparatus is the terminal device. If embodiments are applied to the system architecture shown in FIG. 1, the following access network device that is configured to perform an embodiment shown in FIG. 4 or FIG. 5 may be the access network device 1101 in the system architecture shown in FIG. 1, and the following terminal device that is configured to perform the embodiment shown in FIG. 4 or FIG. 5 may be the terminal device 1301 in the system architecture shown in FIG. 1.

### Embodiment 1

FIG. 4 is a schematic flowchart corresponding to a communication method according to Embodiment 1 of this application. As shown in FIG. 4, the method includes the following steps.

S400. A terminal device determines that a first downlink carrier and a second downlink carrier support sharing of a part or all of channel information.

For example, the terminal device may communicate with an access network device through carrier aggregation. For example, after the terminal device establishes a connection to the access network device in a primary cell, the access network device may configure and activate one or more secondary cells for the terminal device. In this case, the terminal device may work on a plurality of downlink carriers. In an example, the plurality of downlink carriers may include the first downlink carrier and the second downlink carrier. The first downlink carrier and the second downlink carrier may be downlink carriers corresponding to different secondary cells; the first downlink carrier is a downlink carrier corresponding to the primary cell, and the second downlink carrier is a downlink carrier corresponding to the secondary cell; or the first downlink carrier is a downlink carrier corresponding to the secondary cell, and the second downlink carrier is a downlink carrier corresponding to the primary cell.

There may be a plurality of implementations in which the terminal device determines that the first downlink carrier and the second downlink carrier support sharing of the part or all of the channel information. The following describes several possible implementations, for example, Implementation a1 to Implementation a4.

### (1) Implementation a1

When the first downlink carrier and the second downlink carrier are in a same frequency band (frequency band) combination (for example, a first frequency band combination), the terminal device may determine that the first downlink carrier and the second downlink carrier support sharing of the part or all of the channel information. For example, the access network device may preconfigure one or more frequency band combinations for the terminal device, or one or more frequency band combinations may be predefined in a protocol. A plurality of downlink carriers in a same frequency band combination support sharing of the part or all of the channel information.

For example, a frequency band combination may include at least one frequency band, and any two of the at least one frequency band may overlap or not overlap at all. A frequency band in embodiments of this application may also be referred to as a frequency band, or may be a frequency segment or a frequency range. In this embodiment of this application, both the first downlink carrier and the second downlink carrier may be in a frequency band included in the first frequency band combination, or the first downlink carrier and the second downlink carrier may be separately in different frequency bands included in the first frequency band combination. This is not specifically limited.

### (2) Implementation a2

When a difference between a center frequency of the first downlink carrier and a center frequency of the second downlink carrier is less than a first threshold, the terminal device may determine that the first downlink carrier and the second downlink carrier support sharing of the part or all of the channel information. The first threshold may be preconfigured by the access network device for the terminal device, or may be predefined in a protocol. For example, a value of the first threshold may vary with frequency bands of the first downlink carrier and the second downlink carrier.

### (3) Implementation a3

The access network device may send first indication information to the terminal device, where the first indication information indicates that the first downlink carrier and the second downlink carrier support sharing of the part or all of the channel information. Then, after receiving the first indication information, the terminal device may determine, based on the first indication information, that the first downlink carrier and the second downlink carrier support sharing of the part or all of the channel information. There may be a plurality of manners in which the access network device sends the first indication information to the terminal device. For example, the access network device may send the first indication information to the terminal device by using an RRC message, MAC layer control signaling, or physical layer control signaling. The MAC layer control signaling may be a MAC control element (control element, CE). The physical layer control signaling may be downlink control information (downlink control information, DCI).

There may be a plurality of manners in which the first indication information indicates that the first downlink carrier and the second downlink carrier support sharing of the part or all of the channel information. For example, the first indication information may include an identifier of a cell (for example, a cell 1) corresponding to the first downlink carrier and an identifier of a cell (for example, a cell 2) corresponding to the second downlink carrier. For another example, the first indication information may include one or more cell groups, and downlink carriers corresponding to cells in each cell group support sharing of the part or all of the channel information. For example, the first indication information includes a cell group 1 and a cell group 2, where the cell group 1 includes the identifier of the cell 1 and the identifier of the cell 2, and the cell group 2 includes an identifier of a cell 3 and an identifier of a cell 4. Then, after receiving the first indication information, the terminal device may determine, based on the first indication information, that a downlink carrier (namely, the first downlink carrier) corresponding to the cell 1 and a downlink carrier (namely, the second downlink carrier) corresponding to the cell 2 support sharing of the part or all of the channel information and that a downlink carrier corresponding to the cell 3 and a downlink carrier corresponding to the cell 4 support sharing the part or all of the channel information.

For Implementation a3, in an example, the terminal device may send second indication information to the access network device after determining, based on capability information of the terminal device, that at least two of the plurality of downlink carriers can share the part or all of the channel information. The second indication information indicates that the at least two downlink carriers can share the part or all of the channel information. The at least two downlink carriers may include the first downlink carrier and the second downlink carrier. Optionally, the at least two downlink carriers may further include another possible downlink carrier, for example, a third downlink carrier. There may be a plurality of manners in which the second indication information indicates that the at least two downlink carriers can share the part or all of the channel information. For example, the second indication information may include identifiers of cells corresponding to the at least two downlink carriers. Accordingly, after receiving the second indication information, the access network device may determine the first indication information based on the second indication information, and send the first indication information to the terminal device. For example, the second indication information indicates that the first downlink carrier, the second downlink carrier, and the third downlink carrier can share the part or all of the channel information. In this case, the access network device may determine, based on the second indication information, that a part or all of the first downlink carrier, the second downlink carrier, and the third downlink carrier support sharing of the part or all of the channel information, for example, determine that the first downlink carrier and the second downlink carrier support sharing of the part or all of the channel information.

For example, there may be a plurality of manners in which the terminal device determines, based on the capability information of the terminal device, that the at least two of the plurality of downlink carriers can share the part or all of the channel information. For example, the capability information of the terminal device may include a receiving capability of a receive channel of the terminal device. If the terminal device determines that signals on the at least two of the plurality of downlink carriers may be received through a same receive channel, the terminal device may determine that the at least two downlink carriers can share the part or all of the channel information. For another example, the capability information of the terminal device may include a receiving capability of an antenna of the terminal device. If the terminal device determines that the signals on the at least two of the plurality of downlink carriers may be received through a same antenna, the terminal device may determine that the at least two downlink carriers can share the part or all of the channel information.

### (4) Implementation a4

The access network device may send configuration information to the terminal device, where the configuration information is for configuring that there is an association relationship between a reference signal of the first downlink carrier and a reference signal of the second downlink carrier. Then, after receiving the configuration information, the terminal device may determine, based on the configuration information, that the first downlink carrier and the second downlink carrier support sharing of the part or all of the channel information. For example, that there is an association relationship between a reference signal of the first downlink carrier and a reference signal of the second downlink carrier may mean that there is a quasi-co-location (quasi-co-location, QCL) relationship between the reference signal of the first downlink carrier and the reference signal of the second downlink carrier. For example, the access network device may configure that there is a quasi-co-location relationship between a DMRS of the first downlink carrier and a DMRS of the second downlink carrier. In this case, the terminal device may receive the DMRS of the first downlink carrier and the DMRS of the second downlink carrier by using a same space division reception parameter. Alternatively, the access network device may configure that there is a quasi-co-location relationship between a CSI-RS of the first downlink carrier and a CSI-RS of the second downlink carrier. In this case, the terminal device may receive the CSI-RS of the first downlink carrier and the CSI-RS of the second downlink carrier by using a same space division reception parameter.

For example, there may be a plurality of manners in which the access network device configures, by using the configuration information, that there is an association relationship between the reference signal of the first downlink carrier and the reference signal of the second downlink carrier. For example, the access network device may add an identifier of a cell 2 and a reference signal type (for example, a DMRS or a CSI-RS) to configuration information of a cell 1. For example, the configuration information may remain valid until the access network device performs reconfiguration by using an RRC message. Alternatively, the access network device may indicate, by using a MAC CE or DCI, whether the configuration information is valid. For another example, the access network device may configure a cell group for a reference signal of a specific type. There is an association relationship between reference signals of downlink carriers corresponding to cells in the cell group. In this case, the configuration information may include a reference signal type (for example, a DMRS or a CSI-RS) and a cell group.

S401. The terminal device obtains first channel information, where the first channel information may include second channel information, and the first downlink carrier and the second downlink carrier share the second channel information.

S402. The terminal device sends the first channel information to the access network device.

S403. The access network device receives the first channel information, and may further determine channel information of the first downlink carrier and channel information of the second downlink carrier based on the first channel information.

In this embodiment of this application, the first downlink carrier and the second downlink carrier support sharing of the part or all of the channel information. The following separately describes in detail S401 to S403 with reference to two cases.

### Case 1:

In Case 1, the second channel information may include angle channel information, delay channel information, and angle-delay weighting coefficient information. It may be understood as that the first downlink carrier and the second downlink carrier share all of the channel information. In this case, the first channel information may include the second channel information and not include other channel information. That is, the first channel information is the same as the second channel information. In this case, there may be a plurality of implementations in which the terminal device obtains the first channel information (namely, the second channel information). The following describes two possible implementations, which are Implementation b1 and Implementation b2.

### (1) Implementation b1

The terminal device may select a downlink carrier from the first downlink carrier and the second downlink carrier. For example, if the selected downlink carrier is the first downlink carrier, the terminal device may perform measurement based on the reference signal of the first downlink carrier, to obtain the second channel information. There may be a plurality of manners in which the terminal device selects the downlink carrier from the first downlink carrier and the second downlink carrier. For example, the terminal device may perform selection based on at least one of bandwidths of the first downlink carrier and the second downlink carrier, frequencies of the first downlink carrier and the second downlink carrier, and quantities of antennas used by the access network device to send signals on the first downlink carrier and the second downlink carrier. For example, the terminal device may select, based on the bandwidths of the first downlink carrier and the second downlink carrier, a downlink carrier having a larger bandwidth from the first downlink carrier and the second downlink carrier. For another example, the terminal device may select, based on the frequencies of the first downlink carrier and the second downlink carrier, a downlink carrier having a lower frequency from the first downlink carrier and the second downlink carrier. For example, the terminal device may select, based on center frequencies of the first downlink carrier and the second downlink carrier, a downlink carrier having a lower center frequency from the first downlink carrier and the second downlink carrier. In other words, the terminal device may select, based on coverage of the first downlink carrier and the second downlink carrier, a downlink carrier having larger coverage from the first downlink carrier and the second downlink carrier (where coverage of a low-frequency downlink carrier is usually larger than coverage of a high-frequency downlink carrier). For another example, the terminal device may select, based on the quantities of antennas used by the access network device to send signals on the first downlink carrier and the second downlink carrier, a downlink carrier on which a larger quantity of antennas are used.

In the foregoing implementation, the terminal device may perform measurement based on the reference signal of the first downlink carrier, to obtain the second channel information shared by the first downlink carrier and the second downlink carrier, and does not need to perform measurement based on the reference signal of the second downlink carrier. Therefore, a processing burden of channel information measurement performed by the terminal device can be effectively lowered.

### (2) Implementation b2

The terminal device may perform joint measurement based on the reference signal of the first downlink carrier and the reference signal of the second downlink carrier, to obtain the second channel information. Herein, the reference signal of the first downlink carrier and the reference signal of the second downlink carrier may be reference signals of a same type, or may be reference signals of different types. For example, the terminal device may perform joint measurement based on the DMRS of the first downlink carrier and the DMRS of the second downlink carrier, to obtain the second channel information. For another example, the terminal device may alternatively perform joint measurement based on the DMRS of the first downlink carrier and an SRS of the second downlink carrier, to obtain the second channel information.

In the foregoing implementation, the terminal device may perform joint measurement based on the reference signal of the first downlink carrier and the reference signal of the second downlink carrier, to obtain the second channel information shared by the first downlink carrier and the second downlink carrier, and does not need to separately measure channel information for the first downlink carrier and the second downlink carrier. Therefore, a processing burden of channel information measurement performed by the terminal device can be effectively lowered. In addition, through joint measurement, channel information having higher precision can be obtained based on a reference signal having a larger bandwidth.

For example, in Case 1, after determining the second channel information in Implementation b1 or Implementation b2 above, the terminal device may send the second channel information to the access network device for the first downlink carrier (that is, send the second channel information of the first downlink carrier to the access network device), and feed back no channel information for the second downlink carrier. Accordingly, after receiving the second channel information fed back by the terminal device for the first downlink carrier, the access network device may determine that the second downlink carrier and the first downlink carrier share the second channel information. That is, the access network device may determine that the channel information of the first downlink carrier includes the second channel information and that the channel information of the second downlink carrier also includes the second channel information. The channel information of the first downlink carrier is the same as the channel information of the second downlink carrier. In this manner, the terminal device may feed back no channel information for the second downlink carrier. Therefore, channel information feedback overheads can be effectively reduced.

### Case 2:

In Case 2, the second channel information may include a part of angle channel information, delay channel information, and angle-delay weighting coefficient information. For example, the second channel information includes the angle channel information and the delay channel information, but does not include the angle-delay weighting coefficient information. It may be understood as that the first downlink carrier and the second downlink carrier share the part of the channel information. In this case, in addition to the second channel information, the first channel information may further include other channel information, for example, third channel information and fourth channel information. For example, the second channel information includes the angle channel information (for example, *S*) and the delay channel information (for example, *F*). The third channel information includes angle-delay weighting coefficient information 1 (for example, *C*1). The fourth channel information includes angle-delay weighting coefficient information 2 (for example, *C*2). In this case, there may be a plurality of implementations in which the terminal device obtains the first channel information (for example, the second channel information, the third channel information, and the fourth channel information). The following describes two possible implementations, which are Implementation c1 and Implementation c2.

### (1) Implementation c1

The terminal device may select a downlink carrier from the first downlink carrier and the second downlink carrier. For example, if the selected downlink carrier is the first downlink carrier, the terminal device may perform measurement based on the reference signal of the first downlink carrier, to obtain the second channel information (for example, *S* and *F*) and the third channel information (for example, *C*1). In addition, the terminal device may perform measurement based on the reference signal of the second downlink carrier, to obtain the fourth channel information (for example, *C*2). Compared with a manner in which the terminal device separately measures all channel information on each downlink carrier, this manner can effectively lower a processing burden of channel information measurement performed by the terminal device.

For a manner in which the terminal device selects the downlink carrier from the first downlink carrier and the second downlink carrier, refer to the descriptions in Implementation b 1. Details are not described again.

### (2) Implementation c2

The terminal device may perform joint measurement based on the reference signal of the first downlink carrier and the reference signal of the second downlink carrier, to obtain the second channel information (for example, *S* and *F*). In addition, the terminal device may perform measurement based on the reference signal of the first downlink carrier, to obtain the third channel information (for example, *C*1). The terminal device may perform measurement based on the reference signal of the second downlink carrier, to obtain the fourth channel information (for example, *C*2). Compared with a manner in which the terminal device separately measures all channel information on each downlink carrier, this manner can effectively lower a processing burden of channel information measurement performed by the terminal device.

For example, in Case 2, after determining the first channel information in the Implementation c1 or Implementation c2 above, the terminal device may send the second channel information and the third channel information to the access network device for the first downlink carrier (that is, send the second channel information and the third channel information of the first downlink carrier to the access network device), and send the fourth channel information to the access network device for the second downlink carrier (that is, send the fourth channel information of the second downlink carrier to the access network device). Accordingly, after receiving the channel information fed back by the terminal device for the first downlink carrier and the second downlink carrier, the access network device may determine that the second downlink carrier and the first downlink carrier share the second channel information. That is, the access network device may determine that the channel information of the first downlink carrier includes the second channel information and the third channel information and that the channel information of the second downlink carrier includes the second channel information and the fourth channel information. In this manner, the terminal device may feed back a part of channel information for the second downlink carrier. Therefore, channel information feedback overheads can be effectively reduced.

In addition, because the terminal device may feed back the part of the channel information (namely, the fourth channel information) for the second downlink carrier, in a possible example, precision of the fourth channel information may be higher than precision of the third channel information. That is, precision of angle-delay weighting coefficient information of the second downlink carrier may be higher than precision of angle-delay weighting coefficient information of the first downlink carrier. Precision of angle-delay weighting coefficient information may be precision of an angle-delay weighting coefficient. For example, a quantity of bits occupied by an angle-delay weighting coefficient of the second downlink carrier may be increased, to improve the precision of the angle-delay weighting coefficient information of the second downlink carrier. For example, if a quantity of bits occupied by an angle-delay weighting coefficient of the first downlink carrier is 3, the quantity of bits occupied by the angle-delay weighting coefficient of the second downlink carrier may be increased to 4. In this manner, precision of channel coefficient weighted quantization can be effectively improved.

In a possible implementation, the access network device may send third indication information to the terminal device. The third indication information indicates a channel information feedback type of the first downlink carrier and/or a channel information feedback type of the second downlink carrier. Channel information feedback types may include a first type, a second type, and a second type. If the third indication information indicates that the channel information feedback type of the first downlink carrier is the first type and that the channel feedback type of the second downlink carrier is the second type, the terminal device may send the second channel information and the third channel information to the access network device for the first downlink carrier, and send the fourth channel information to the access network device for the second downlink carrier (where the precision of the fourth channel information is the same as the precision of the third channel information). If the third indication information indicates that the channel information feedback type of the first downlink carrier is the first type and that the channel feedback type of the second downlink carrier is the third type, the terminal device may send the second channel information and the third channel information to the access network device for the first downlink carrier, and send the fourth channel information to the access network device for the second downlink carrier (where the precision of the fourth channel information is higher than the precision of the third channel information).

In another possible implementation, the terminal device may select the downlink carrier from the first downlink carrier and the second downlink carrier. A channel information feedback type of the selected downlink carrier is a first type, and a channel information feedback type of an unselected downlink carrier is a second type or a third type. There may be a plurality of manners in which the terminal device selects the downlink carrier from the first downlink carrier and the second downlink carrier. For example, refer to the descriptions in Implementation b 1. Details are not described again.

S404. The access network device sends downlink information to the terminal device on the first downlink carrier and/or the second downlink carrier.

Herein, after determining the channel information of the first downlink carrier and the channel information of the second downlink carrier, the access network device may obtain a channel matrix based on the channel information of the first downlink carrier, then process a to-be-sent signal on the first downlink carrier by using a matched precoding matrix, and subsequently, send the downlink information to the terminal device on the first downlink carrier; and/or may obtain a channel matrix based on the channel information of the second downlink carrier, then process a to-be-sent signal on the second downlink carrier by using a matched precoding matrix, and subsequently, send the downlink information to the terminal device on the second downlink carrier.

According to the method in the foregoing embodiment, the first downlink carrier and the second downlink carrier support sharing of the part or all of the channel information. In this way, the terminal device may not need to separately measure the channel information of the first downlink carrier and the second downlink carrier. This helps lower the processing burden of channel information measurement. In addition, the terminal device may not need to separately feed back the channel information of the first downlink carrier and the second downlink carrier, so that the channel information feedback overheads are reduced.

### Embodiment 2

FIG. 5 is a schematic flowchart corresponding to a communication method according to Embodiment 2 of this application. As shown in FIG. 5, the method includes the following steps.

S501. An access network device obtains first channel information, where the first channel information includes second channel information, and a first downlink carrier and a second downlink carrier share the second channel information.

Herein, a terminal device may communicate with the access network device through carrier aggregation. In this case, the terminal device may work on a plurality of downlink carriers. In an example, the plurality of downlink carriers may include the first downlink carrier and the second downlink carrier.

For example, the second channel information may include a part of angle channel information, delay channel information, and angle-delay weighting coefficient information. For example, the second channel information includes the angle channel information and the delay channel information, but does not include the angle-delay weighting coefficient information. It may be understood as that the first downlink carrier and the second downlink carrier share a part of channel information. In this case, in addition to the second channel information, the first channel information may further include other channel information, for example, third channel information and fourth channel information. For example, the second channel information includes the angle channel information (for example, *S*) and the delay channel information (for example, *F*). The third channel information includes angle-delay weighting coefficient information 1 (for example, *C*1). The fourth channel information includes angle-delay weighting coefficient information 2 (for example, *C*2).

There may be a plurality of implementations in which the access network device obtains the first channel information (for example, the second channel information, the third channel information, and the fourth channel information). The following describes two possible implementations, which are Implementation d1 and Implementation d2.

### (1) Implementation d1

The access network device performs joint measurement based on a reference signal of an uplink carrier (referred to as a first uplink carrier) corresponding to the first downlink carrier and a reference signal of an uplink carrier (referred to as a second uplink carrier) corresponding to the second downlink carrier, to obtain the second channel information. Herein, the reference signal of the first uplink carrier and the reference signal of the second uplink carrier may be reference signals of a same type, or may be reference signals of different types. For example, the access network device performs joint measurement based on an SRS of the first uplink carrier and an SRS of the second uplink carrier, to obtain the second channel information. In addition, after determining that the first downlink carrier and the second downlink carrier support sharing of the part of the channel information, the terminal device may perform measurement based on a reference signal of the first downlink carrier, to obtain the third channel information; and feed back the third channel information for the first downlink carrier. In this way, the access network device may receive the third channel information of the first downlink carrier. The terminal device may perform measurement based on a reference signal of the second downlink carrier, to obtain the fourth channel information; and feed back the fourth channel information for the second downlink carrier. In this way, the access network device may receive the fourth channel information of the second downlink carrier.

Further, the access network device may determine that channel information of the first downlink carrier includes the second channel information and the third channel information, and channel information of the second downlink carrier includes the second channel information and the fourth channel information.

In addition, in this implementation, the first downlink carrier and the second downlink carrier may be downlink carriers corresponding to different secondary cells; the first downlink carrier is a downlink carrier corresponding to a primary cell, and the second downlink carrier is a downlink carrier corresponding to a secondary cell; or the first downlink carrier is a downlink carrier corresponding to a secondary cell, and the second downlink carrier is a downlink carrier corresponding to a primary cell.

### (2) Implementation d2

The access network device performs measurement based on a reference signal of an uplink carrier corresponding to the first downlink carrier, to obtain the second channel information. In addition, after determining that the first downlink carrier and the second downlink carrier support sharing of the part of the channel information, the terminal device may perform measurement based on a reference signal of the first downlink carrier, to obtain the third channel information; and feed back the third channel information for the first downlink carrier. In this way, the access network device may receive the third channel information of the first downlink carrier. The terminal device may perform measurement based on a reference signal of the second downlink carrier, to obtain the fourth channel information; and feed back the fourth channel information for the second downlink carrier. In this way, the access network device may receive the fourth channel information of the second downlink carrier. Further, the access network device may determine that channel information of the first downlink carrier includes the second channel information and the third channel information, and channel information of the second downlink carrier includes the second channel information and the fourth channel information.

For example, in this implementation, the first downlink carrier may be a downlink carrier corresponding to a primary cell, and the second downlink carrier is a downlink carrier corresponding to a secondary cell. For example, if the terminal device does not support uplink carrier aggregation, the terminal device may send an SRS on an uplink carrier corresponding to the primary cell, but does not send an SRS on an uplink carrier corresponding to the secondary cell. In this case, the access network device may perform measurement based on the SRS of the uplink carrier corresponding to the first downlink carrier, to obtain the second channel information.

For example, the access network device configures and activates a cell 1 of 1.8 GHz and a cell 2 of 2.1 GHz for the terminal device, where the cell 1 includes only a downlink carrier 1, and the cell 2 includes a downlink carrier 2 and an uplink carrier 2. The access network device may determine, based on an SRS sent on the uplink carrier 2 in the cell 2, the second channel information (for example, *S* and *F*) shared by the downlink carrier 1 and the downlink carrier 2. The terminal device may determine the third channel information (for example, *C*1) of the downlink carrier 1 based on a CSI-RS on the downlink carrier 1, and send the third channel information to the access network device; and determine the fourth channel information (for example, *C*2) of the downlink carrier 2 based on a CSI-RS on the downlink carrier 2, and send the fourth channel information to the access network device. Further, the access network device may determine that channel information of the downlink carrier 1 includes S, *F,* and *C*1 and that the channel information of the downlink carrier 2 includes *S*, *F,* and *C*2.

It should be noted that, in another possible case, the second channel information may include the angle channel information, the delay channel information, and the angle-delay weighting coefficient information. It may be understood as that the first downlink carrier and the second downlink carrier share all of the channel information. In this case, the first channel information may include the second channel information and not include other channel information. Further, the access network device may determine the second channel information (namely, the first channel information) with reference to the manner in Implementation d1 or Implementation d2 above, and the terminal device may either not need to measure and report channel information.

S502. The access network device sends downlink information to the terminal device on the first downlink carrier and/or the second downlink carrier.

Herein, for S502, refer to the descriptions of S404 in Embodiment 1.

According to the method in the foregoing embodiment, the first downlink carrier and the second downlink carrier support sharing of the part or all of the channel information. Therefore, the access network device may determine a part of the channel information of the first downlink carrier and the second downlink carrier based on the reference signal of the uplink carrier corresponding to the first downlink carrier and/or the reference signal of the uplink carrier corresponding to the second downlink carrier. In this way, a processing burden of channel information measurement performed by the terminal device can be lowered, and channel information feedback overheads can be reduced.

For Embodiment 1 and Embodiment 2, the following should be noted:
(1) Operation numbers in the flowcharts in the foregoing embodiments are merely an example of procedure execution, and do not constitute any limitation on an execution sequence of the operations. In embodiments of this application, there is no strict execution sequence between operations that do not have a time sequence dependency relationship with each other. In addition, not all the operations shown in the flowcharts are mandatory operations, and some operations may be added to or deleted from the flowcharts based on an actual requirement.
(2) The foregoing focuses on differences between Embodiment 1 and Embodiment 2. For content other than the differences, mutual reference may be made between Embodiment 1 and Embodiment 2.

The foregoing mainly describes the solutions provided in embodiments of this application from a perspective of interaction between the access network device and the terminal device. It may be understood that to implement the foregoing functions, the access network device or the terminal device may include a corresponding hardware structure and/or software module for implementing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the functions for each particular application, but it should not be considered that the implementation goes beyond the scope of this application.

In embodiments of this application, division into functional units may be performed on the terminal device and the access network device based on the foregoing method examples. For example, division into each functional unit may be based on each corresponding function, or two or more functions may be integrated into one unit. The integrated unit may be implemented in a form of hardware, or may be implemented in a form of a software functional unit.

When the integrated unit is used, FIG. 6 is a possible example block diagram of an apparatus according to an embodiment of this application. As shown in FIG. 6, the apparatus 600 may include a processing unit 602 and a communication unit 603. The processing unit 602 is configured to control and manage an action of the apparatus 600. The communication unit 603 is configured to support the apparatus 600 in communicating with another device. Optionally, the communication unit 603 is also referred to as a transceiver unit, and may include a receiving unit and/or a sending unit. The receiving unit and the sending unit are respectively configured to perform a receiving operation and a sending operation. The apparatus 600 may further include a storage unit 601, configured to store program code and/or data of the apparatus 600.

The apparatus 600 may be the terminal device in the foregoing embodiments, or may be a chip disposed in the terminal device. The processing unit 602 may support the apparatus 600 in performing an action of the terminal device in the foregoing method examples. Alternatively, the processing unit 602 mainly performs an internal action of the terminal device in the method examples, and the communication unit 603 may support the apparatus 600 in communicating with another device.

Specifically, in an embodiment, the apparatus 600 may work on a plurality of downlink carriers, and the plurality of downlink carriers include a first downlink carrier and a second downlink carrier. The processing unit 602 is configured to obtain first channel information, where the first channel information includes second channel information, and the first downlink carrier and the second downlink carrier share the second channel information. In addition, the communication unit 603 is configured to send the first channel information to an access network device.

In a possible design, the first channel information further includes third channel information and fourth channel information. The processing unit 602 is specifically configured to: perform measurement based on a reference signal of the first downlink carrier, to obtain the second channel information and the third channel information; and perform measurement based on a reference signal of the second downlink carrier, to obtain the fourth channel information.

In a possible design, the first channel information further includes third channel information and fourth channel information. The processing unit 602 is specifically configured to: perform joint measurement based on a reference signal of the first downlink carrier and a reference signal of the second downlink carrier, to obtain the second channel information; perform measurement based on the reference signal of the first downlink carrier, to obtain the third channel information; and perform measurement based on the reference signal of the second downlink carrier, to obtain the fourth channel information.

In a possible design, the communication unit 603 is configured to send the second channel information and the third channel information of the first downlink carrier to the access network device, and send the fourth channel information of the second downlink carrier to the access network device.

In a possible design, the processing unit 602 is further configured to determine that the first downlink carrier and the second downlink carrier support sharing of a part or all of channel information.

In a possible design, the processing unit 602 is specifically configured to: determine, when the first downlink carrier and the second downlink carrier are in a same frequency band combination, that the first downlink carrier and the second downlink carrier support sharing of the part or all of the channel information; or determine, when a difference between a center frequency of the first downlink carrier and a center frequency of the second downlink carrier is less than a first threshold, that the first downlink carrier and the second downlink carrier support sharing of the part or all of the channel information.

In a possible design, the communication unit 603 is further configured to receive first indication information from the access network device, where the first indication information indicates that the first downlink carrier and the second downlink carrier support sharing of the part or all of the channel information.

In a possible design, the communication unit 603 is further configured to receive configuration information from the access network device, where the configuration information is for configuring that there is an association relationship between the reference signal of the first downlink carrier and the reference signal of the second downlink carrier. The processing unit 602 is specifically configured to determine, based on the configuration information, that the first downlink carrier and the second downlink carrier support sharing of the part or all of the channel information.

The apparatus 600 may be the access network device in the foregoing embodiments, or may be a chip disposed in the access network device. The processing unit 602 may support the apparatus 600 in performing an action of the access network device in the foregoing method examples. Alternatively, the processing unit 602 mainly performs an internal action of the access network device in the method examples, and the communication unit 603 may support the apparatus 600 in communicating with another device.

Specifically, in an embodiment, the processing unit 602 is configured to obtain first channel information, where the first channel information includes second channel information, and a first downlink carrier and a second downlink carrier share the second channel information. In addition, the communication unit 603 is configured to send downlink information to a terminal device on the first downlink carrier and/or the second downlink carrier.

In a possible design, the first channel information further includes third channel information and fourth channel information. The communication unit 603 is further configured to receive the second channel information and the third channel information of the first downlink carrier from the terminal device, and receive the fourth channel information of the second downlink carrier from the terminal device.

In a possible design, the first channel information further includes third channel information and fourth channel information. The processing unit 602 is specifically configured to: perform joint measurement based on a reference signal of an uplink carrier corresponding to the first downlink carrier and a reference signal of an uplink carrier corresponding to the second downlink carrier, to obtain the second channel information; or perform measurement based on a reference signal of an uplink carrier corresponding to the first downlink carrier, to obtain the second channel information. The communication unit 603 is further configured to receive the third channel information of the first downlink carrier from the terminal device, and receive the fourth channel information of the second downlink carrier from the terminal device.

In a possible design, the communication unit 603 is further configured to send first indication information to the terminal device, where the first indication information indicates that the first downlink carrier and the second downlink carrier support sharing of a part or all of channel information.

In a possible design, the communication unit 603 is further configured to send configuration information to the terminal device, where the configuration information is for configuring that there is an association relationship between a reference signal of the first downlink carrier and a reference signal of the second downlink carrier.

It should be understood that division into units in the apparatus is merely logical function division. During actual implementation, all or some of the units may be integrated into one physical entity or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element, or may be implemented in a form in which the processing element invokes software.

In an example, a unit in any one of the foregoing apparatuses may be one or more integrated circuits configured to implement the foregoing methods, for example, one or more application specific integrated circuits (application specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated and implemented in a form of a system-on-a-chip (system-on-a-chip, SoC).

The foregoing unit for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit for sending is an interface circuit of the apparatus, and is configured to send a signal to another apparatus. For example, when the apparatus is implemented in the form of the chip, the sending unit is an interface circuit that is of the chip and that is configured to send a signal to another chip or apparatus.

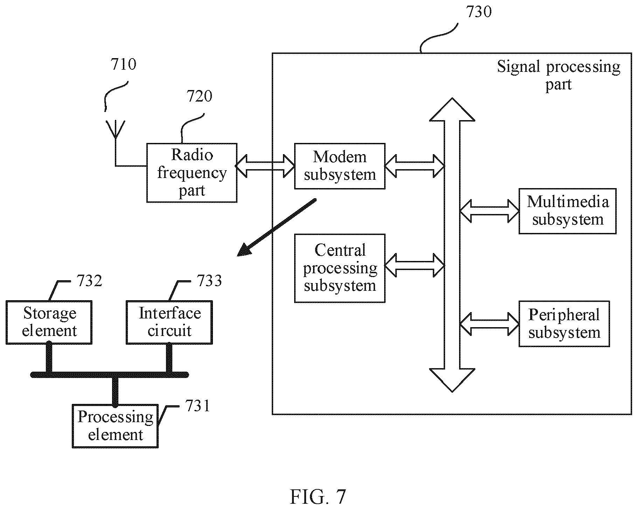

FIG. 7 is a schematic diagram of a structure of a terminal device according to an embodiment of this application. The terminal device may be the terminal device in the foregoing embodiments, and is configured to implement operations of the terminal device in the foregoing embodiments. As shown in FIG. 7, the terminal device includes an antenna 710, a radio frequency part 720, and a signal processing part 730. The antenna 710 is connected to the radio frequency part 720. In a downlink direction, the radio frequency part 720 receives, through the antenna 710, information sent by a network device, and sends, to the signal processing part 730 for processing, the information sent by the network device. In an uplink direction, the signal processing part 730 processes information about the terminal device, and sends processed information to the radio frequency part 720; and the radio frequency part 720 processes the information about the terminal device, and then sends processed information to the network device through the antenna 710.

The signal processing part 730 may include a modem subsystem, configured to implement processing of data at each communication protocol layer. The signal processing part 730 may further include a central processing subsystem, configured to implement processing of an operating system and an application layer of the terminal device. In addition, the signal processing part 730 may further include another subsystem, for example, a multimedia subsystem or a peripheral subsystem. The multimedia subsystem is configured to control a camera, screen display, and the like of the terminal device, and the peripheral subsystem is configured to implement a connection to another device. The modem subsystem may be a separately disposed chip.

The modem subsystem may include one or more processing elements 731, for example, include one main control CPU and another integrated circuit. In addition, the modem subsystem may further include a storage element 732 and an interface circuit 733. The storage element 732 is configured to store data and a program. However, a program for performing the methods performed by the terminal device in the foregoing methods may not be stored in the storage element 732, but is stored in a memory outside the modem subsystem, and is loaded and used by the modem subsystem when to be used. The interface circuit 733 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units in the terminal device that are for implementing the steps in the foregoing methods may be implemented by scheduling a program by a processing element. For example, the apparatus used in the terminal device includes a processing element and a storage element. The processing element invokes a program stored in the storage element, to perform the methods performed by the terminal device in the foregoing method embodiments. The storage element may be a storage element located on a same chip as the processing element, namely, an on-chip storage element.

In another implementation, a program for performing the methods performed by the terminal device in the foregoing methods may be in a storage element that is on a different chip from the processing unit, namely, an off-chip storage element. In this case, the processing element invokes or loads the program from the off-chip storage element to an on-chip storage element, to invoke and perform the methods performed by the terminal device in the foregoing method embodiments.

In still another implementation, units in the terminal device that are for implementing the steps in the foregoing methods may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

Units in the terminal device that are for implementing the steps in the foregoing methods may be integrated together, and implemented in a form of a SoC. The SoC is configured to implement the foregoing methods. At least one processing element and a storage element may be integrated into the chip, and the processing element invokes a program stored in the storage element to implement the foregoing methods performed by the terminal device. Alternatively, at least one integrated circuit may be integrated into the chip, to implement the foregoing methods performed by the terminal device. Alternatively, with reference to the foregoing implementations, functions of some units may be implemented by a processing element invoking a program, and functions of some units may be implemented in a form of an integrated circuit.

It can be learned that the foregoing apparatus used in the terminal device may include at least one processing element and an interface circuit. The at least one processing element is configured to perform any method that is performed by the terminal device and that is provided in the foregoing method embodiments. The processing element may perform some or all steps performed by the terminal device, in a first manner, to be specific, by invoking a program stored in a storage element; or may perform some or all steps performed by the terminal device, in a second manner, to be specific, by using a hardware integrated logical circuit in the processor element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit in FIG. 6. For example, the processing element may be a general-purpose processor, for example, a CPU, or may be one or more integrated circuits configured to implement the foregoing methods, for example, one or more ASICs, one or more microprocessors DSPs, one or more FPGAs, or a combination of at least two of these forms of integrated circuits. The storage element may be implemented by using a memory. A function of the storage element may be the same as a function of the storage unit in FIG. 6. The storage element may be implemented by using a memory. A function of the storage element may be the same as a function of the storage unit in FIG. 6. The storage element may be a memory, or may be a general name of a plurality of memories.

The terminal device shown in FIG. 7 can implement processes related to the terminal device in the foregoing method embodiments. Operations and/or functions of the modules in the terminal device shown in FIG. 7 are respectively intended to implement corresponding procedures in the foregoing method embodiments. For details, refer to the descriptions in the foregoing method embodiments. To avoid repetition, detailed descriptions are properly omitted herein.

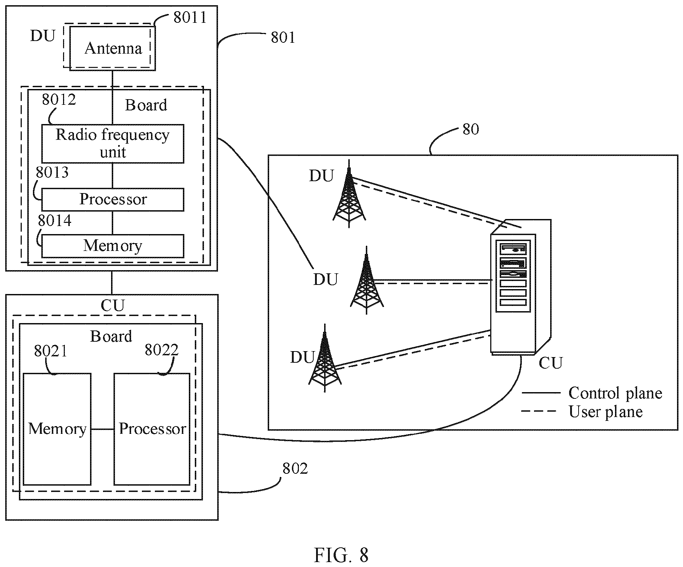

FIG. 8 is a schematic diagram of a structure of an access network device according to an embodiment of this application. The access network device (or a base station) may be used in the system architecture shown in FIG. 1, to perform functions of the access network device in the foregoing method embodiments. The access network device 80 may include one or more DUs 801 and one or more CUs 802. The DU 801 may include at least one antenna 8011, at least one radio frequency unit 8012, at least one processor 8013, and at least one memory 8014. The DU 801 is mainly configured to: send and receive a radio frequency signal, perform conversion between the radio frequency signal and a baseband signal, and perform some baseband processing. The CU 802 may include at least one processor 8022 and at least one memory 8021.

The CU 802 is mainly configured to: perform baseband processing, control the access network device, and so on. The DU 801 and the CU 802 may be physically disposed together, or may be physically disposed separately, namely, a distributed base station. The CU 802 is a control center of the access network device, may also be referred to as a processing unit, and is mainly configured to complete a baseband processing function. For example, the CU 802 may be configured to control the access network device to perform operation procedures related to the access network device in the foregoing method embodiments.

In addition, optionally, the access network device 80 may include one or more radio frequency units, one or more DUs, and one or more CUs. The DU may include at least one processor 8013 and at least one memory 8014, the radio frequency unit may include at least one antenna 8011 and at least one radio frequency unit 8012, and the CU may include at least one processor 8022 and at least one memory 8021.

In an instance, the CU 802 may include one or more boards. A plurality of boards may jointly support a radio access network (for example, a 5G network) of a single access standard, or may separately support radio access networks (for example, an LTE network, a 5G network, or another network) of different access standards. The memory 8021 and the processor 8022 may serve the one or more boards. In other words, a memory and a processor may be disposed on each board. Alternatively, a plurality of boards may share a same memory and a same processor. In addition, a necessary circuit may further be disposed on each board. The DU 801 may include one or more boards. A plurality of boards may jointly support a radio access network (for example, the 5G network) of a single access standard, or may separately support radio access networks (for example, the LTE network, the 5G network, or the another network) of different access standards. The memory 8014 and the processor 8013 may serve one or more boards. In other words, a memory and a processor may be disposed on each board. Alternatively, a plurality of boards may share a same memory and a same processor. In addition, a necessary circuit may further be disposed on each board.

The access network device shown in FIG. 8 can implement processes related to the access network device in the foregoing method embodiments. Operations and/or functions of the modules in the access network device shown in FIG. 8 are respectively intended to implement corresponding procedures in the foregoing method embodiments. For details, refer to the descriptions in the foregoing method embodiments. To avoid repetition, detailed descriptions are properly omitted herein.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be for implementing each process and/or each block in the flowcharts and/or the block diagrams and a combination of processes and/or blocks in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus configured to implement a specified function in one or more processes in the flowcharts and/or in one or more blocks in the block diagrams.

These computer program instructions may be stored in a computer-readable memory that can direct a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of the claims of this application and their equivalent technologies.

## Claims

1. A communication method, wherein the method is applied to a terminal device, the terminal device works on a plurality of downlink carriers, the plurality of downlink carriers comprise a first downlink carrier and a second downlink carrier, and the method comprises:
obtaining first channel information, wherein the first channel information comprises second channel information, and the first downlink carrier and the second downlink carrier share the second channel information; and
sending the first channel information to an access network device.

2. The method according to claim 1, wherein the first channel information further comprises third channel information and fourth channel information; and
the obtaining first channel information comprises:
performing measurement based on a reference signal of the first downlink carrier, to obtain the second channel information and the third channel information; and performing measurement based on a reference signal of the second downlink carrier, to obtain the fourth channel information.

3. The method according to claim 1, wherein the first channel information further comprises third channel information and fourth channel information; and
the obtaining first channel information comprises:
performing joint measurement based on a reference signal of the first downlink carrier and a reference signal of the second downlink carrier, to obtain the second channel information; performing measurement based on the reference signal of the first downlink carrier, to obtain the third channel information; and performing measurement based on the reference signal of the second downlink carrier, to obtain the fourth channel information.

4. The method according to claim 2 or 3, wherein the sending the first channel information to an access network device comprises:
sending the second channel information and the third channel information of the first downlink carrier to the access network device, and sending the fourth channel information of the second downlink carrier to the access network device.

5. The method according to any one of claims 1 to 4, wherein the method further comprises:
determining that the first downlink carrier and the second downlink carrier support sharing of a part or all of channel information.

6. The method according to claim 5, wherein the determining that the first downlink carrier and the second downlink carrier support sharing of a part or all of channel information comprises:
determining, when the first downlink carrier and the second downlink carrier are in a same frequency band combination, that the first downlink carrier and the second downlink carrier support sharing of the part or all of the channel information; or
determining, when a difference between a center frequency of the first downlink carrier and a center frequency of the second downlink carrier is less than a first threshold, that the first downlink carrier and the second downlink carrier support sharing of the part or all of the channel information.

7. The method according to claim 5, wherein the determining that the first downlink carrier and the second downlink carrier support sharing of a part or all of channel information comprises:
receiving first indication information from the access network device, wherein the first indication information indicates that the first downlink carrier and the second downlink carrier support sharing of the part or all of the channel information.

8. The method according to claim 5, wherein the determining that the first downlink carrier and the second downlink carrier support sharing of a part or all of channel information comprises:
receiving configuration information from the access network device, wherein the configuration information is for configuring that there is an association relationship between the reference signal of the first downlink carrier and the reference signal of the second downlink carrier; and determining, based on the configuration information, that the first downlink carrier and the second downlink carrier support sharing of the part or all of the channel information.

9. A communication method, wherein the method is applied to an access network device, and the method comprises:
obtaining first channel information, wherein the first channel information comprises second channel information, and a first downlink carrier and a second downlink carrier share the second channel information; and
sending downlink information to a terminal device on the first downlink carrier and/or the second downlink carrier.

10. The method according to claim 9, wherein the first channel information further comprises third channel information and fourth channel information; and
the obtaining first channel information comprises:
receiving the second channel information and the third channel information of the first downlink carrier from the terminal device, and receiving the fourth channel information of the second downlink carrier from the terminal device.

11. The method according to claim 9, wherein the first channel information further comprises third channel information and fourth channel information; and
the obtaining first channel information comprises:
performing joint measurement based on a reference signal of an uplink carrier corresponding to the first downlink carrier and a reference signal of an uplink carrier corresponding to the second downlink carrier, to obtain the second channel information; or performing measurement based on a reference signal of an uplink carrier corresponding to the first downlink carrier, to obtain the second channel information; and
receiving the third channel information of the first downlink carrier from the terminal device, and receiving the fourth channel information of the second downlink carrier from the terminal device.

12. The method according to any one of claims 9 to 11, wherein the method further comprises:
sending first indication information to the terminal device, wherein the first indication information indicates that the first downlink carrier and the second downlink carrier support sharing of a part or all of channel information.

13. The method according to any one of claims 9 to 11, wherein the method further comprises:
sending configuration information to the terminal device, wherein the configuration information is for configuring that there is an association relationship between a reference signal of the first downlink carrier and a reference signal of the second downlink carrier.

14. A communication apparatus, comprising a module configured to perform the method according to any one of claims 1 to 8.

15. A communication apparatus, comprising a module configured to perform the method according to any one of claims 9 to 13.

16. A communication apparatus, comprising a processor and a memory, wherein the processor is coupled to the memory, and the processor is configured to implement the method according to any one of claims 1 to 8.

17. A communication apparatus, comprising a processor and a memory, wherein the processor is coupled to the memory, and the processor is configured to implement the method according to any one of claims 9 to 13.

18. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 8 through a logic circuit or by executing code instructions.

19. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 9 to 13 through a logic circuit or by executing code instructions.

20. A computer-readable storage medium, wherein the storage medium stores a computer program or instructions; and when the computer program or the instructions are executed by a communication apparatus, the method according to any one of claims 1 to 8 or the method according to any one of claims 9 to 13 is implemented.
